# EUROPEAN PATENT APPLICATION

(11) **EP 0 621 575 A1**
(43) Date of publication of application: **26.10.1994**
(21) Application number: 94200831.9
(22) Date of filing: 29.03.1994
(51) Int. Cl.: G09F 13/08, G01D 11/28, B60Q 3/04, B23K 26/00, B29C 45/14, B29C 45/16, B29L 9/00

(54) **Decorative plastics article**

(30) Priority: 23.04.1993 US 51423
(71) Applicant: DELCO ELECTRONICS CORPORATION, Kokomo Indiana 46902 (US)
(72) Inventor: Meyer, Tamara Marie, Laporte, Indiana 46350 (US); Hassler, Ed. G., Sharpsville, Indiana 46068 (US); Fye, Michael Edwin, Kokomo, Indiana 46901 (US)
(74) Representative: Denton, Michael John

(57) **Abstract**

A process for forming a decorative plastics article comprises the steps of receiving an in-moulding foil (10) with a decorative material (14,16) applied thereto, moulding a plastics body (31) and in-moulding the decorative material (14,16) from the foil (10) to the plastics body (31), applying an opaque layer (50) to the plastics body (31) covering the decorative material (14,16), and laser (42) trimming the opaque material (50) away from the decorative material (14,16) in pre-determined patterns to define graphic characters (16), wherein the decorative material (14,16) is applied to eliminate witness lines.

## Description

This invention relates to a decorative plastics article, such as trimplates and faceplates of the type commonly used in vehicle instrumentation panels and as vehicle radio and/or air control faceplates.

One desirable design feature for a radio faceplate is back-lighting of the faceplate for night-time viewing. Typically, such faceplates comprise an opaque plastics body and a clear plastics cover moulded together. The opaque portion has windows or openings for light to travel from the rear of the device to the clear window to illuminate graphics applied on the clear window.

One known method of applying graphics to the clear window is to silk screen patches of ink onto the clear window, to apply an opaque paint over the silk screened inks and then to laser trim away the opaque paint, thereby revealing the underlying silk screened inks in graphic patterns. One disadvantage to this approach is that when inks are silk screened onto the plastics cover and then painted over, there are witness lines visible through the paint around the edge of the silk screened ink. This is due to the fact that the ink is raised, compared to the remainder of the clear cover.

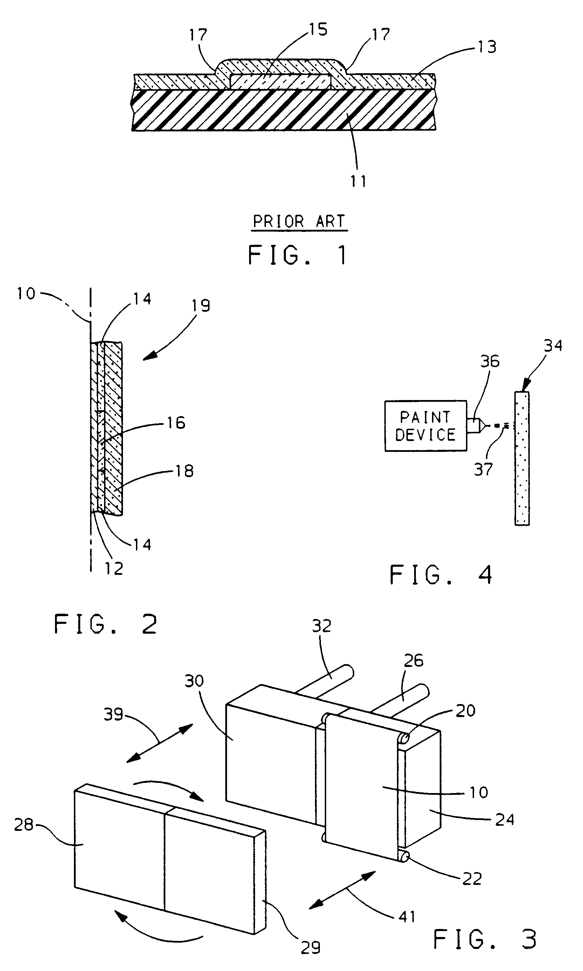

Figure 1 illustrates in cross-section a prior art trimplate. Ink layer 15 is silk screened onto plastics body 11 and the entire front surface is covered with opaque layer 13. The opaque layer is selectively removed to form graphics patterns (not shown). Figure 1 illustrates the raised edges 17 of the opaque layer 13 caused by the ink 15 being applied on top of the plastics body 11. The raised edges 17 visible to viewers of the display are known as "witness lines."

Another known method of providing graphics on a trimplate is to apply the graphics to an appliqué and then to fit the appliqué to the trimplate. In this method, however, appliqué edges are visible and a bezel is required to hide the visible edges. Also, the use of appliqués is not suitable for curved bodies.

The present invention seeks to provide an improved decorative plastics article and a system for producing a decorative plastics article.

According to an aspect of the present invention, there is provided a decorative plastics article as specified in claim 1.

According to another aspect of the present invention, there is provided a method of producing a decorative plastics article as specified in claim 7.

According to another aspect of the present invention, there is provided a manufacturing system as specified in claim 11.

This invention can provide in some embodiments a new process of manufacturing decorated plastics articles, such as trimplates and faceplates, of the type commonly used in automotive instrument panels, radios and the like.

Advantageously, the invention can eliminate the occurrence of witness lines in decorative plastics articles, particularly at ink edges.

The decorative plastics article may be suitable for use in back-lit displays. The decorative plastics article may have curved surfaces.

Preferably, the article comprises a plastics body with a first surface, the plastics body having therein a decorative material proximal to and substantially covering the first surface, and an opaque layer selectively covering the decorative material to form graphics characters.

Advantageously, the method comprises the steps of applying a decorative material to an in-moulding foil, moulding a plastics body, in-moulding the decorative material to the plastics body to substantially cover a first surface of the plastics body, covering the decorative material with an opaque layer, and selectively removing the opaque layer to form graphics characters with the decorative material.

Advantageously, the manufacturing system comprises a foil application station for applying the decorative material to a foil, an in-moulding station comprising means for in-moulding the decorative material to a plastics body, a paint station comprising means for applying an opaque paint to cover at least one side of the plastics body upon which the decorative material is in-moulded and a laser station for selectively removing the applied paint to define graphics on the plastics body.

An embodiment of the present invention is described below, by way of example only, with reference to the accompanying drawings, in which:
Figure 1 illustrates in cross-section a prior art trimplate;
Figures 2-5 illustrate the various steps of an embodiment of manufacture of trimplates;
Figures 6-10 illustrate a decorative plastics article at various stages in the manufacturing process of Figures 2 to 5;
Figures 11 and 12 are flow charts of the manufacturing process of Figures 2 to 5;
Figures 13 and 14 illustrate a control panel including an embodiment of trimplate; and
Figure 15 illustrates a manufacturing system operable in accordance with the flow charts of Figures 11 and 12.

Referring to Figure 2, an in-moulding foil 10 of the type commonly used in in-moulding processes has applied thereon first and second inks 14 and 16 to be in-moulded to a plastics body. Preferably, also included on the foil 10 is a hard coat 12 and a release 18. The hard coat 12 need not be applied to the foil as it can be applied to the plastics article after the in-moulding process, if so desired. The first and second inks 14 and 16 are applied so that the edges of the second ink 16 substantially abut the surrounding edges of first ink 14.

The release 18 is an agent well known to those skilled in the art and aids in the transfer of the ink 16 from the foil 10 to the plastics article in the in-moulding process. One known method of applying these layers to the foil 10 is through silk screening. Reference 19 generally designates the foil contents 12, 14, 16 and 18. The application of inks, release agents and so on to in-moulding foils such as foil 10 is well known to those skilled in the art.

In general, foil 10 is provided as a reel of foil and includes several applications of contents 19. Before each in-moulding step (described below), the reel is advanced so that a new set of contents 19 is moved into a mould station (described below) for in-moulding.

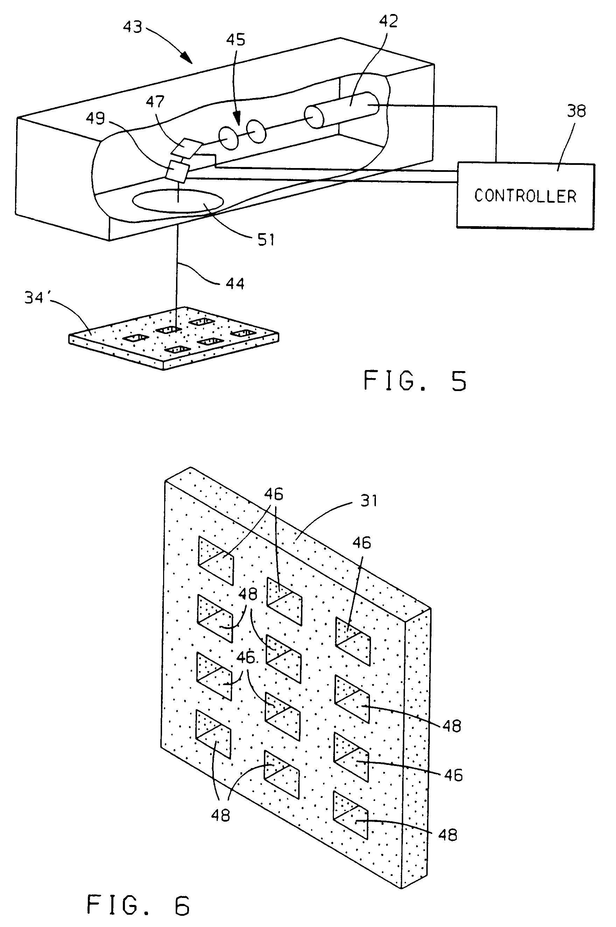

Referring to Figure 3, once the contents 19 are applied to the foil 10, foil 10 is placed on reel 20 and fed to reel 22 through an in-moulding station 24. In the preferred embodiment, the trimplate is moulded in a two-step process, although this could also be achieved in a one-step process. The two-step process shown includes two moulds 28 and 29 located on a pivoting apparatus (not shown, but easily implemented by the skilled person) which pivots the moulds 28 and 29 between the two stations 30 and 24. At each station, the moulds 28 and 29 move in the directions of arrows 39 and 41 to engage and disengage moulding stations 30 and 24. In the two-step process shown, the mould 28 is provided at a first moulding station 30 where barrel 32 injects plastics into the mould 28 to form a plastics body. An example plastics body formed at this step, which is suitable for use as a back-lit trimplate, is shown in Figure 6. Plastics body 31 contains windows 46 through which light may be fed from the rear of the plastics body 31 through the windows 46 to illuminate graphics applied thereon. Windows 48 are suitable for implementations with push button switches, such as in radio displays.

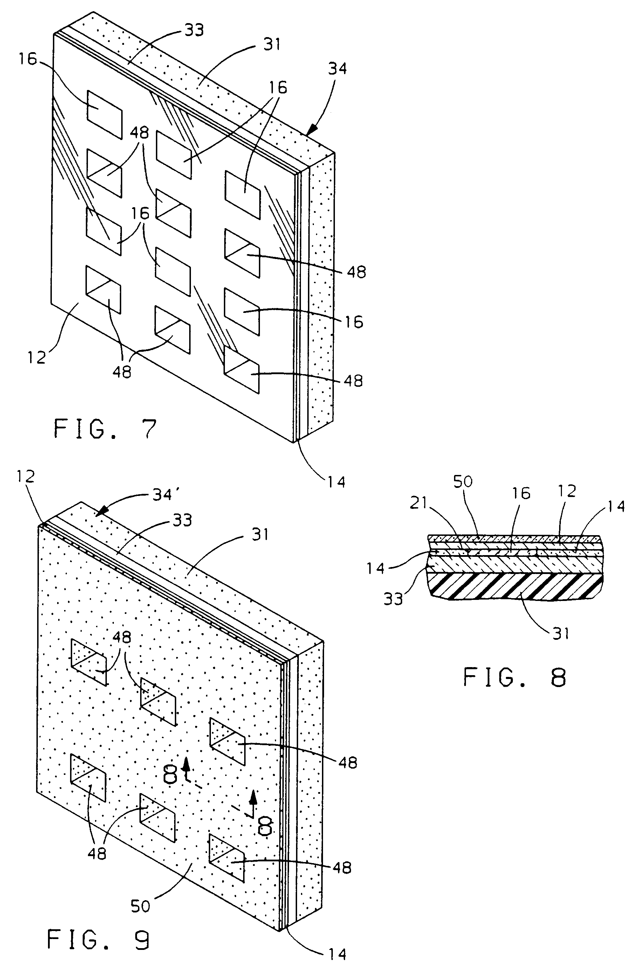

After the plastics body 31 is moulded at station 30, it moves to station 24, where mould 29 is disposed. At station 24, barrel 26 injects a clear plastics material into the mould 29, moulding clear plastics window layer 33 onto plastics body 31 (see Figure 7). The heat and the pressure from the plastics material flowing into the mould cause transfer of the first and second inks 14 and 16 and hard coat 12 to the clear plastics cover layer, in-moulding the inks and hard coat into the clear plastics window layer.

After in-moulding station 24, the article 34, shown in Figure 7, is removed from the mould 29 and the apparatus pivots so that mould 29 engages mould station 30 and so that mould 28 engages mould station 24 to repeat the moulding process.

Article 34, shown in Figure 7, comprises plastics body 31, window layer 33, ink portions 14 and 16 and hard coat 12. Openings 48 are provided for use with push buttons. The various ink portions 16 may all be of the same colour or may be of different colours. Covering the portions of the surface with a first ink 14 (for example white ink) which are not covered with second ink 16 (another decorative colour) aids in maintaining opaque the portions of the display not intended to be back-lit.

The next step in the manufacturing process is shown in Figure 4 where a paint device 36 applies through a paint spray 37, an opaque paint, typically black, to the article 34. The resulting article 34' is shown in Figures 8 and 9 and includes the paint layer 50, which covers the complete front surface of article 34, including decorative ink portions 16, as shown. Preferably, the paint layer 50 is at least 20 to 25 micrometres thick to minimise light leaks through the layer 50. The cross-section in Figure 8 illustrates that the decorative material comprising ink 16, being in-moulded to plastics piece 33, is on the front surface 21 of window layer 33 and substantially abuts the surrounding edges of ink 14. The ink layout will vary from implementation to implementation, but generally, one ink, such as ink 16, may be continued across the front surface 21 of window layer 33 until it abuts an ink of a different colour. In contrast with the prior art shown in Figure 1, this structure advantageously eliminates "witness lines" due to the elimination of raised edges.

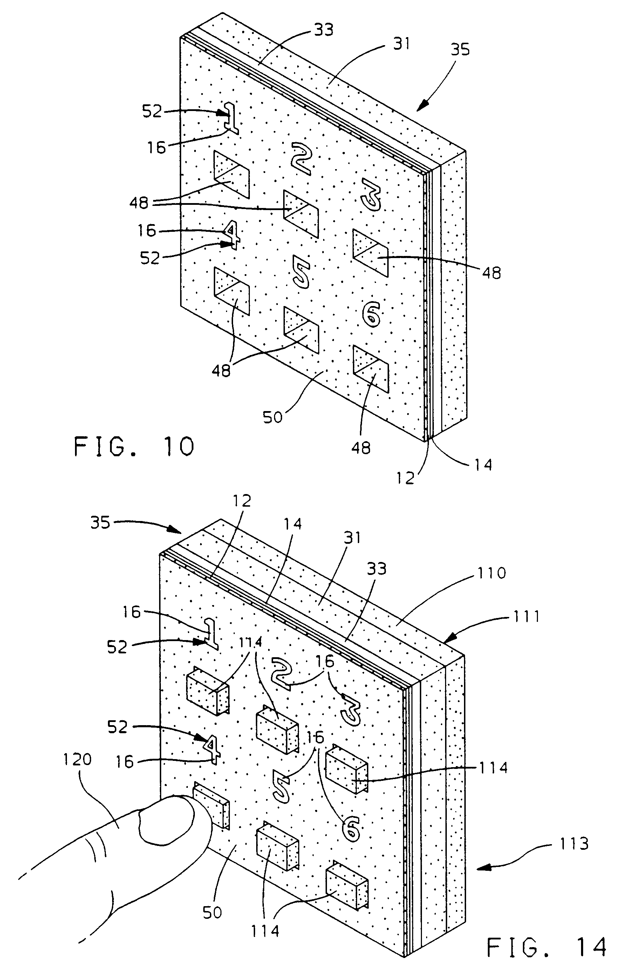

The next step of the process is shown in Figure 5, where an automatic laser station includes a controller 38 and laser unit 43. Laser unit 43, of a type well known to those skilled in the art, comprises NdYAG laser 42, which generates a laser beam 44 which travels through lenses 45, to x and y deflection mirrors 47 and 49 and through flatfield lens 51, to be focused on article 34'. Through the automatic control of mirrors 47, 49 and laser 42, laser beam 44 selectively removes the opaque paint in desired patterns over the decorative ink portions 16 to provide graphics 52 shown in the resulting decorative article 35 in Figure 10.

In order to withstand the laser process, the decorative ink portions 16 are preferably 8 to 15 micrometres thick. This thickness range for ink portions 16 maintain the translucent nature of the ink portions 16, allowing the portions to be lit by back lighting while providing a thick enough layer that the ink is not burned off by the laser beam 44. Alternative laser stations well known to those skilled in the art include laser robots.

The decorative article shown in Figure 10 is suitable for use as a radio trimplate or in any other type of panel application. When the ink 16 is illuminated with ambient light from the front, it reflects the light in the colour of the ink appearing as graphics 52 contrasting with the black paint 50. During night time or in low-light environments, light may be provided from the back of article 35 through holes 46 (Figure 6) and clear cover 33 (Figure 7) to ink 16, which diffuses the light wherein the graphics 52 appear illuminated, providing a back-lit article 35. Through the use of in-moulding of the ink layers to the article, witness lines and ink edges are eliminated. Although the apparatus shown in Figure 10 has a flat face at which the graphics 52 appear, this process works equally well on round, curved and irregularly shaped moulded articles so that the graphics need not appear on a flat surface.

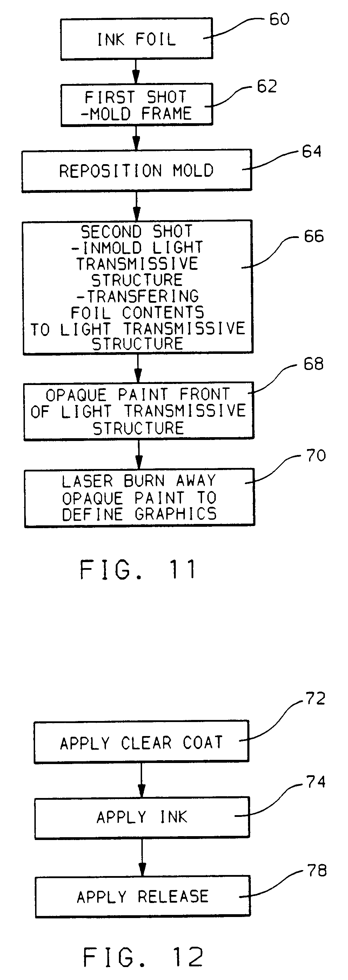

Referring to Figures 11 and 12, the flow charts show an embodiment of method for producing a trimplate. The flow chart in Figure 12 illustrates steps for applying contents 19 to the foil 10 shown in Figure 2, in which a clear coat 12 is first applied at step 72 to the foil 19. At step 74 one or more ink layers 14, 16 are applied to the clear coat. The release layer 18 is then applied at step 78.

At step 60, the foil 10 is provided from a reel 20 and then passed at step 62 to first moulding station 30 at which plastics material is injected into mould 28 to form plastics body 31. The mould is then repositioned at step 64 to moulding station 24 at which the light transmissive structure, in this example window 33, is moulded onto the plastics body 31, causing a transfer of the inks 14, 16 and coating 12. At step 68, the opaque paint layer 50 is applied over the structure, while at step 70 the laser 42 is operated to burn away paint layer 50 to form the graphic symbols 16.

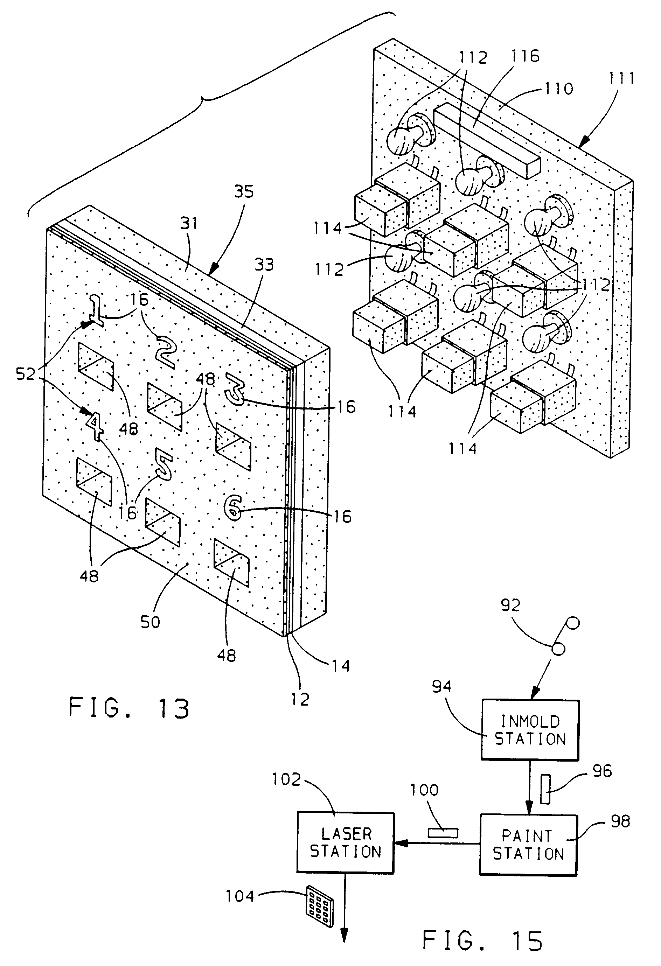

Referring to Figure 13, the example of decorative article 35 shown is assembled with circuit board assembly 111 which comprises the control panel 113 shown in Figure 14. Circuit board assembly 111 includes light sources 112, push-button switches 114 and electronics 116, all mounted on circuit board 110. The push-buttons 114 and electronics 116 may be of a type commonly used in vehicle radio control panels.

In operation of the control panel, an operator 120 depresses one or more of the push-button switches 114.

Referring to Figure 15, the manufacturing system shown receives a pre-prepared foil unit 92, which is fed to in-moulding station 94. In-moulding station 94 comprises a station such as station 24 shown in Figure 3, for in-moulding the decorative material onto a plastics body.

The in-moulded article 96 resulting from in-moulding station 94 is next fed to the paint station 98 comprising means for applying an opaque layer over the in-moulded portions of the plastics article, such as the means shown in Figure 4, comprising a paint sprayer. The resulting article 100 is then taken to the laser station 102, comprising a laser apparatus (see for example Figure 5) for selectively removing, by evaporative trimming, portions of the opaque layer to provide the resulting decorative article 104 with graphic symbols.

The disclosures in United States patent application no. 051,423, from which this application claims priority, and in the abstract accompanying this application are incorporated herein by reference.

## Claims

1. Decorative plastics article comprising a plastics body (31,33) with a first surface; a decorative material (14,16) moulded to the first surface; an opaque layer (50) covering the first surface and the decorative material, except in defined portions comprising graphic characters, wherein the decorative material substantially covers the first surface and the opaque layer is substantially smooth.

2. Decorative plastics article according to claim 1, wherein the plastics body comprises first and second plastics portions (31,33), the first plastics portion (31) being formed from an opaque plastics material and the second plastics portion (32) being formed from a transparent or translucent plastics material.

3. Display apparatus according to claim 2, wherein the opaque plastics portion (31) has formed therein openings (46) through which light can pass to back light the graphics characters.

4. Decorative plastics article according to claim 2 or 3, wherein the opaque plastics portion (31) comprises openings (48) for receiving push-button switches (114).

5. Decorative plastics article according to any preceding claim, wherein the decorative material comprises at least first and second ink portions (14,16), wherein the first ink portion (16) includes first edges substantially abutting edges of the second ink portion (14).

6. Decorative plastics article according to any preceding claim, wherein the plastics body, the decorative material and/or the opaque layer are substantially flat or curved.

7. A method of producing a decorative plastics article comprising the steps of applying a decorative material (14,16) to a moulding foil (10); moulding a plastics body (31) and moulding the decorative material from the foil to the plastics body, wherein the decorative material substantially covers a first surface of the plastics body; applying an opaque layer (50) to the plastics body covering the decorative material; and laser trimming the opaque material away from the decorative material in pre-determined patterns to form graphic characters.

8. A method according to claim 7, comprising the steps of applying a hard coating layer (12) and a release layer (18) to the foil.

9. A method according to claim 7 or 8, wherein the decorative material comprises first and second ink portions (14,16), the first ink portion (16) including edges substantially abutting edges of the second ink portion.

10. A method according to claim 7, 8 or 9, wherein the step of moulding the plastics body comprises the steps of first moulding an opaque plastics body in a first moulding station and second moulding a clear plastics window layer to the opaque plastics body in a second moulding station, during which second moulding the decorative material is moulded to the clear plastics window layer.

11. A manufacturing system for manufacturing a decorative plastics article comprising a first station (30) comprising means for receiving a moulding foil (10), having applied thereto a decorative material (16), and moulding means (28,29) for moulding a plastics body and for moulding the decorative material from the moulding foil to the plastics body, wherein the decorative material substantially covers a first surface of the plastics body; a second station (34) comprising applying means (35) for applying an opaque layer (50) over at least a portion of the plastics body to cover the moulded decorative material; and a third station (43) comprising trimming means (42) for trimming the opaque layer above the decorative material to form graphics characters (16).
